# EUROPÄISCHE PATENTSCHRIFT

(11) **EP 0 569 734 B1**
(45) Veröffentlichungstag und Bekanntmachung des Hinweises auf die Patenterteilung: **21.01.1998**
(21) Anmeldenummer: 93106198.0
(22) Anmeldetag: 16.04.1993
(51) Int. Cl.: C04B 41/86

(54) **Verfahren zur Herstellung von im Porzellanbrand farbstabilen Dekoren und eine hierfür geeignete Pigmentzusammensetzung**
Process for the preparation of decorations color-stabilized during sintering porcelain and pigment composition suitable therefor
Procédé de production de décorations à couleurs résistantes à la cuisson de la porcelaine et composition de pigments utile à cela

(30) Priorität: 15.05.1992 DE 4216175
(43) Veröffentlichungstag der Anmeldung: 18.11.1993
(73) Patentinhaber: CERDEC AKTIENGESELLSCHAFT KERAMISCHE FARBEN, D-60327 Frankfurt (DE)
(72) Erfinder: Speer, Dietrich, Dr., W-6450 Hanau 9 (DE); Kiss, Akos, Dr., W-6450 Hanau 9 (DE); Horst, Jenny, W-6450 Hanau 8 (DE); Halbritter, Günter, W-6458 Rodenbach (DE); Löw, Rita, W-6054 Rodgau 3 (DE)

(56) Entgegenhaltungen:
- DE-A- 2 312 535
- DE-A- 2 315 611

## Beschreibung

Die Erfindung richtet sich auf ein Verfahren zur Herstellung von im Porzellanbrand (Glattbrand) im wesentlichen farbstabilen Dekoren, das heißt, solchen, welche nach der Applikation auf ungebranntem Porzellan und Aufbringung einer Glasur die thermische Belastung des Porzellanbrandes ohne wesentliche Farbveränderungen überstehen. Die Dekore enthalten Einschlußpigmente auf der Basis von in einer transparenten oxidischen oder silikatischen Hülle eingeschlossenen Kristallen aus farbigen Schwermetallsulfiden, -seleniden oder -sulfoseleniden, insbesondere Cadmiumsulfid beziehungsweise Cadmiumsulfoselenid enthaltende Zirkon-Einschlußpigmente. Ein weiterer Gegenstand der Erfindung richtet sich auf eine zur Durchführung des Verfahrens geeignete Pigmentzusammensetzung, welche außer einem der genannten Einschlußpigmente mindestens einen farbstabilisierenden Hilfsstoff enthält.

Zur Herstellung von Farbdekoren auf Porzellan sind unterschiedliche Verfahren bekannt: So läßt sich glattgebranntes glasiertes Porzellan unter Verwendung keramischer Farbkörper nachträglich dekorieren, indem mittels üblicher Dekorationsverfahren eine Dekorschicht aufgetragen und das erhaltene Dekor im sogenannten Dekorbrand eingebrannt wird. Ein weiteres Verfahren zur Herstellung von Dekoren auf Porzellan besteht darin, daß im sogenannten Biskuitbrand bei etwa 1000 °C vorgebranntes und auf diese Weise vorverfestigtes Porzellan nach Aufbringung eines Farbdekors und einer Porzellanglasur während des sich anschließenden eigentlichen Porzellanbrandes bei 1200 bis 1500 °C, meist als Glatt- oder Garbrand bezeichnet, in das eigentliche glasierte und dekorierte Porzellan überführt wird. Weichporzellane lassen sich gegenüber Hartporzellanen leichter mit einem Farbdekor versehen, da eine größere Anzahl keramischer Farbkörper die bei Weichporzellan mögliche niedrigere Brenntemperatur von 1200 bis etwa 1350 °C ohne Zersetzung oder nennenswerte Farbveränderung überstehen. Unter der extremen Temperaturbelastung des Porzellanbrandes für insbesondere Hartporzellan - mehrere Stunden im Bereich von etwa 1350 °C bis etwa 1500 °C - sind die meisten herkömmlichen Farbkörper einschließlich der Einschlußpigmente nicht mehr oder nicht mehr ausreichend farbstabil. In derartigen Fällen sind die Dekorationsmöglichkeiten begrenzt.

In neueren Porzellanfertigungsverfahren wird versucht, mit einem Farbdekor versehenes glasiertes Porzellan so herzustellen, daß nur ein einziger Brennvorgang, ein sogenannter Einmalschnellbrand, erforderlich ist. Die Brenntemperaturen liegen hier meist um 1400 °C. Wie oben bereits ausgeführt, macht sich auch hier die eingeschränkte Palette an farbstabilen Pigmenten negativ bemerkbar. Über die Porzellanherstellung nach dieser neuen Technik wird in Keramische Zeitschrift 43 Nr. 7 (1991) 473-477 berichtet. Hinweise auf bei dieser Technik auftretende Glasurfehler und Möglichkeiten zu deren Behebung, etwa eine oxidierende Brandatmophäre bei 1280 °C vor dem Schmelzfeuer, sind cfi/Ber. DKG 2/82, 142-148 zu entnehmen.

Selbst die als besonders temperaturstabil und glasurstabil bekannten Einschlußpigmente auf der Basis von in einer transparenten oxidischen oder silikatischen Hülle eingeschlossenen Kristallen aus farbigen Schwermetallsulfiden, -seleniden oder -sulfoseleniden erwiesen sich unter den Bedingungen des Porzellanbrandes bei 1350 bis 1500 °C als nicht ausreichend farbstabil. Beispielsweise treten beim Zirkon-Cadmiumsulfid-Gelb und Zirkon-Cadmiumsulfoselenid-Rot graue beziehungsweise braune Verfärbungen auf. Es wird vermutet, daß unter den Bedingungen des Porzellanbrandes die Farbgeber Cadmiumsulfid beziehungsweise Cadmiumsulfoselenid teilweise aus der sie umgebenden Hülle austreten und sich in dieser Form oder in Verbindung mit Glasurbestandteilen kolloidal in der Glasur abscheiden.

Aufgabe der vorliegenden Erfindung war somit, ein Verfahren zur Herstellung von im Porzellanbrand (Glattbrand) ausreichend farbstabilen Dekoren aufzuzeigen, ohne daß es der Entwicklung grundlegend neuer Pigmente bedurfte. Es bestand ein besonderes Interesse, leuchtend gelbe bis rote Einschlußpigmente mit sulfidischen und/oder selenidischen Einschlüssen, wie sie aus der DE-OS 23 12 535 bekannt und im Handel erhältlich sind, der Dekoration von Porzellan vor dem eigentlichen Porzellanbrand zugänglich zu machen. Schließlich richtet sich eine weitere Aufgabe auf die Bereitstellung einer Pigmentzusammensetzung, welche außer den genannten Einschlußpigmenten einen farbstabilisierenden Hilfsstoff enthält, so daß sich die Pigmentzusammensetzung in einfacher Weise zur Herstellung von im Porzellanbrand farbstabilen Dekoren verwenden läßt.

Gefunden wurde ein Verfahren zur Herstellung von im Porzellanbrand (Glattbrand) im wesentlichen farbstabilen Dekoren, umfassend die Schritte des Aufbringens einer Dekorschicht und einer Glasurschicht auf ungebranntes oder im Biskuitbrand vorgebranntes Porzellan und des Porzellanbrandes bei einer Temperatur im Bereich von 1300 bis 1500 °C, das dadurch gekennzeichnet ist, daß in der Dekorschicht Einschlußpigmente auf der Basis von in einer transparenten oxidischen oder silikatischen Hülle eingeschlossenen Kristallen aus farbigen Schwermetallsulfiden, -seleniden oder -sulfoseleniden und in der Dekorschicht und/oder in der Glasurschicht mindestens ein farbstabilisierender Hilfsstoff aus der Reihe von Cer(III)- oder Cer(IV)-Verbindungen, Zinkoxid oder anderen während des Porzellanbrandes Zinkionen bildenden Zinkverbindungen in einer Menge von mindestens 2 Gew.-%, jeweils berechnet als ZnO beziehungsweise Ce₂O₃ beziehungsweise CeO₂ und bezogen auf die Menge an anorganischen Feststoffen in der Dekor- bzw. Glasurschicht, eingesetzt werden.

Gegenstand der Erfindung ist ferner eine Pigmentzusammensetzung nach dem Gegenstand des unabhängigen Anspruchs 6, deren besondere Ausgestaltungen Gegenstand der abhängigen Ansprüche 7-10 sind.

Völlig überraschend wurde gefunden, daß Zinkoxid sowie andere während des Porzellanbrandes Zinkionen bildende Zinkverbindungen sowie Cer(III)- oder Cer(IV)-Verbindungen die gewünschte farbstabilisierende Wirkung ausüben. Die chemische Unterschiedlichkeit der farbstabilisierenden Hilfsstoffe läßt vermuten, daß bei der Farbstabilisierung unterschiedliche Wirkungsmechanismen zur Geltung kommen. Eine besonders gute Farbstabilisierung wird dann erzielt, wenn sich die farbstabilisierenden Hilfsstoffe in wirksamer Menge in der räumlichen Nachbarschaft der Pigmentteilchen befinden. Dies ist insbesondere der Fall, wenn die farbstabilisierenden Hilfsstoffe in der Dekorschicht eingesetzt werden. Es wird vermutet, daß die während des Porzellanbrandes aus den Einschlußpigmenten austretenden farbverändernden Bestandteile durch die Cer(IV)-Verbindungen zu farblosen Stoffen oxidiert beziehungsweise mittels der aus Zinkoxid oder anderen Zinkverbindungen resultierenden Zinkionen in Form farbloser Verbindungen abgefangen werden. Die für die Farbstabilisierung verantwortlichen Reaktionen erfolgen im Bereich der im Schmelzzustand befindlichen umgebenden Glasur. Das Zink der farbstabilisierend wirkenden Zinkverbindungen liegt in derartigen Schmelzen in ionischer Form vor.

Die erfindungsgemäß einzusetzenden Einschlußpigmente sind lange bekannt - siehe DE-OS 23 12 535, US-PS 4,874,433. Bei der oxidischen oder silikatischen Hülle handelt es sich um Substanzen aus der Reihe ZrO₂, SnO₂, Al₂O₃ und ZrSiO₄. Einschlußpigmente auf der Basis von Zirkoniumsilikat (Zirkon) oder Zinndioxid werden bevorzugt; besonders bevorzugt werden Zirkon-Einschlußpigmente, welche auch im Handel erhältlich sind. Unter den farbigen Schwermetallsulfiden, -seleniden oder -sulfoseleniden, welche in der Hülle eingeschlossen sind, sind die Verbindungen des Cadmiums besonders hervorzuheben. Das erfindungsgemäße Verfahren gestattet es, und dies ist ein besonderer Vorteil, daß die für ihre Leuchtkraft bekannten gelben, orangen und roten Zirkon-Einschlußpigmente mit CdS- beziehungsweise Cd(S,Se)-Einschlüssen zur Dekoration von noch nicht gargebranntem Porzellan eingesetzt werden können, ohne daß es bei dem Garbrand zu nennenswerten Farbveränderungen kommt.

Unter den als farbstabilisierend wirkenden Hilfsstoffen aus der Reihe der Cer(III)- und Cer(IV)-Verbindungen sind beispielsweise Cerdioxid und Cer(III)-carbonat zu nennen, wobei aber Cerdioxid bevorzugt wird. Aus der Reihe der farbstabilisierend wirkenden Zinkverbindungen sind außer Zinkoxid zinkhaltige Glasfritten mit einem ZnO-Gehalt von mindestens 10 Gew.-%, vorzugsweise 20 bis 70 Gew.-%, besonders geeignet. Als weitere Zinkverbindungen, welche in Gegenwart einer schmelzenden Glasur Zinkionen bilden, kommen beispielsweise solche Verbindungen infrage, welche während des Aufheizens auf die Temperatur des Porzellanbrandes Zinkoxid bilden, also beispielsweise Zinkcarbonat, basisches Zinkcarbonat, Zinkacetat und Zinksulfat; einsatzfähig sind aber auch Zinkverbindungen wie Zinkphosphate, Zinkborate und Zinksilikate.

Welche Menge an einem oder mehreren farbstabilisierenden Hilfsstoffen erfindungsgemäß eingesetzt wird, richtet sich einerseits nach dem gewünschten Stabilisierungseffekt andererseits nach der zu erwartenden thermischen Belastung und schließlich nach der Art des Einsatzes. Die optimale Menge wird der Fachmann durch orientierende Versuche ermitteln. Im Falle des Einsatzes des oder der farbstabilisierenden Hilfsstoffe in der Porzellanglasur darf nicht außer acht gelassen werden, daß durch die erfindungsgemäßen Hilfsstoffe auch die physikalischen Eigenschaften der Glasur, etwa die Viskosität, beeinflußt werden.

Eine größere Flexibilität bezüglich der Stoffauswahl und Menge an farbstabilisierenden Hilfsstoffen wird dadurch erzielt, daß sich diese Hilfsstoffe nicht oder nur in geringem Umfang in der Glasurschicht, sondern bevorzugt in der Dekorschicht befinden. Dies läßt sich dadurch bewerkstelligen, daß zur Aufbringung der Dekorschicht eine Pigmentzusammensetzung verwendet wird, welche außer den Einschlußpigmenten mindestens einen der erfindungsgemäßen farbstabilisierenden Hilfsstoffe, vorzugsweise in einer Menge von 5 bis 50 Gew.-%, berechnet als ZnO beziehungsweise CeO₂ beziehungsweise Ce₂O₃ und bezogen auf die Menge an Einschlußpigmenten, enthält. Eine derartige Pigmentzusammensetzung läßt sich in einfacher Weise durch intensives Mischen und/oder gemeinsames Mahlen der Einschlußpigmente mit dem oder den farbstabilisierenden Hilfsstoffen in An- oder Abwesenheit eines flüssigen oder pastösen Mediums, meist eines sogenannten Druckmediums, herstellen. Als Medien werden insbesondere solche verwendet, wie sie zur Aufbringung von Dekoren auf keramische Gegenstände allgemein üblich sind. Es handelt sich also um beispielsweise Wasser, wäßrig organische Flüssigkeiten, organische Polymere enthaltende Flüssigkeiten und wachsartige Stoffe. Zusätzlich kann die Pigmentzusammensetzung auch weitere Verarbeitungshilfsmittel, Viskositätsregulatoren und Stoffe zum beschleunigten Trocknen oder Härten der Dekorschicht enthalten.

Bevorzugte erfindungsgemäße Pigmentzusammensetzungen enthalten außer dem Einschlußpigment, vorzugsweise einem Cadmiumsulfid oder Cadmiumsulfoselenid enthaltenden Zirkon-Einschlußpigment, ZnO in einer Menge von 20 bis 40 Gew.-%, oder eine zinkhaltige Glasfritte mit einem ZnO-Gehalt von 30 bis 50 Gew.-% in einer Menge von 30 bis 50 Gew.-%, jeweils bezogen auf das in der Zusammensetzung enthaltene Einschlußpigment. Eine weitere bevorzugte Pigmentzusammensetzung enthält 10 bis 30 Gew.-% Cerdioxid, bezogen auf das in der Zusammensetzung enthaltende Einschlußpigment. Sofern die Pigmentzusammensetzung zusätzlich ein flüssiges oder pastöses Medium enthält, wird der Fachmann dieses in einer solchen Menge einsetzen, daß er die für sein gewähltes Applikationsverfahren zur Aufbringung der Dekorschicht geeignete Verarbeitungsviskosität erhält. Der Auftrag der Dekorschicht kann von Hand oder maschinell mittels bekannter direkter oder indirekter Druckverfahren erfolgen.

Die Art und Weise des Auftrags einer Glasur in einem ungebrannten oder im Biskuitbrand vorgebrannten geformten Porzellangegenstand ist dem Fachmann bekannt. Desgleichen wird der Fachmann die Auswahl der Glasurbestandteile und die Zusammensetzung der Glasur auf die Zusammensetzung des Porzellans und die dafür erforderlichen Brennbedingungen abstimmen.

Durch das erfindungsgemäße Verfahren sowie die erfindungsgemäße Pigmentzusammensetzung ist es möglich geworden, leuchtend gelbe bis rote Einschlußpigmente zur Dekoration von noch nicht glattgebranntem Porzellan heranzuziehen. Damit erübrigt sich eine nachträgliche Dekoration und ein dafür erforderlicher Dekorbrand. Sofern ungebranntes Porzellan erfindungsgemäß dekoriert und mit einer entsprechend ausgewählten Porzellanglasur glasiert wird, kann das gesamte System in einem einzigen Brand gebrannt werden, womit zusätzlich der Biskuitbrand entfällt.

Die nachfolgenden Beispiele und Vergleichsbeispiele sollen die Erfindung weiter verdeutlichen:

### Vergleichsbeispiel 1

Handelsübliches Zirkon-Cadmiumsulfid-Gelb wurde in Wasser angepastet und die Paste auf einen ungebrannten Porzellanteller mittels Pinsel aufgetragen. Nach der Trocknung des Dekors wurde unter Verwendung einer bei ca. 1300 °C erweichenden Glasur glasiert. Der dekorierte und glasierte Porzellanteller wurde in einem gasbeheizten Tunnelofen insgesamt 6 Stunden (einschließlich Aufheizzeit) gebrannt, wobei die Temperatur eine Stunde zwischen 1350 und 1400 °C lag und die Ofenatmosphäre während dieser Zeit reduzierend war.

Das Dekor weist nach dem Brand anstelle einer brillantgelben Farbe eine graue bis hellgelbolive Farbe auf.

### Vergleichsbeispiel 2

Gemäß Vergleichsbeispiel 1 wird Zirkon-Cadmiumsulfoselenid-Rot nach Anpastung auf einen ungebrannten Porzellanteller aufgetragen und glasiert und anschließend dem Porzellanbrand zugeführt.

Anstelle der erwarteten brillantroten Farbe des Dekors ist diese nun braun.

### Beispiel 1

Zirkon-Cadmiumsulfid-Gelb wird mit 20 Gew.-% Zinkoxid vermischt und gemeinsam mit Wasser angepastet. Nach Auftragung der Paste, Glasierung und Porzellanbrand unter Bedingungen des Vergleichsbeispiels 1 wird ein gegenüber Vergleichsbeispiel 1 wesentlich weniger verfärbtes Dekor erhalten - die Farbe ist gelb mit nur leichtem Graustich.

### Beispiel 2

Beispiel 1 wird wiederholt, wobei jedoch die Menge an Zinkoxid auf 40 Gew.-%, bezogen auf das Einschlußpigment, erhöht wird. Die Farbe des Dekors ist nach dem Porzellanbrand rein gelb, in dicken Lagen brillantgelb.

### Beispiel 3

Zirkon-Cadmiumsulfoselenid-Rot wird mit 20 Gew.-% Zinkoxid gemischt und mit Wasser angepastet. Nach dem Auftrag der Dekorschicht, Glasierung und Porzellanbrand gemäß Vergleichsbeispiel 1 weist das Dekor eine rote Farbe mit nur geringem Braunstich auf.

### Beispiel 4

Beispiel 3 wurde unter Verwendung der doppelten Menge Zinkoxid, also 40 Gew.-%, wiederholt. Die Farbe des Dekors ist eindeutig rot, die Farbintensität ist durch die Verdünnung geringfügig geringer.

### Beispiel 5

Zirkon-Cd(S,Se)-Rot wird mit 30 Gew.-% basischem Zinkcarbonat vermischt und dann mit Wasser angepastet. Nach Auftragen des Dekors, Glasierung und Porzellanbrand gemäß Vergleichsbeispiel 1 weist das Dekor eine rote Farbe auf.

### Beispiel 6

Zirkon-Cd(S,Se)-Rot wird mit 50 Gew.-% einer Glasfritte auf der Basis eines Alkali-zinksilikats mit einem ZnO-gehalt von 31 Gew.-% vermischt und dann mit Wasser angepastet. Nach Auftragen des Dekors, Glasierung und Porzellanbrand gemäß Vergleichsbeispiel 1 weist das Dekor eine brillante lachsrote Farbe auf.

Die Dekorfarbe der entsprechenden Pigmentzusammensetzung mit nur 30 Gew.-% der Glasfritte (anstelle 50 Gew.-%) ist weniger brillant.

### Beispiel 7

Als farbstabilisierender Hilfsstoff wurden jeweils 10, 20 beziehungsweise 30 Gew.-% Cerdioxid, bezogen auf das Einschlußpigment, mit Zirkon-CdS-Gelb, Zirkon-Cd(S,Se)-Orange und Zirkon-Cd(S,Se)-Rot vermischt. Die Auftragung des Dekors, Glasierung und der Porzellanbrand erfolgten wie in Vergleichsbeispiel 1. In allen Fällen wurden gelbe, orange beziehungsweise rote Dekore erhalten, wobei bereits die Dekore mit nur 20 Gew.-% CeO₂ leuchtend brillant sind.

### Beispiel 8

Beispiel 7 wurde wiederholt, wobei anstelle Cerdioxid aber Cer(III)-carbonat in Form des Ce₂(CO₃)₃ · 5H₂O eingesetzt wurde. Hier sind die Dekore mit 30 Gew.-% des Cer(III)-carbonats nach dem Brand brillanter als jene mit 20 Gew.-%.

## Patentansprüche (Patentansprüche für folgende(n) Vertragsstaat(en): DE, FR, GB, IT, NL, PT)

1. Verfahren zur Herstellung von im Porzellanbrand (Glattbrand) im wesentlichen farbstabilen Dekoren, umfassend die Schritte des Aufbringens einer Dekorschicht und einer Glasurschicht auf ungebranntes oder im Biskuitbrand vorgebranntes Porzellan und des Porzellanbrandes bei einer Temperatur im Bereich von 1300 bis 1500 °C,
dadurch gekennzeichnet,
daß in der Dekorschicht Einschlußpigmente auf der Basis von in einer transparenten oxidischen oder silikatischen Hülle eingeschlossenen Kristallen aus farbigen Schwermetallsulfiden, -seleniden oder -sulfoseleniden und in der Dekorschicht und/oder in der Glasurschicht mindestens ein farbstabilisierender Hilfsstoff aus der Reihe von Cer(III)- oder Cer(IV)-Verbindungen, Zinkoxid oder anderen während des Porzellanbrandes Zinkionen bildenden Zinkverbindungen in einer Menge von mindestens 2 Gew.-%, jeweils berechnet als ZnO beziehungsweise Ce₂O₃ beziehungsweise CeO₂ und bezogen auf die Menge an anorganischen Feststoffen in der Dekor- bzw. Glasurschicht, eingesetzt werden.

2. Verfahren nach Anspruch 1,
dadurch gekennzeichnet,
daß zur Aufbringung der Dekorschicht eine Pigmentzusammensetzung verwendet wird, welche außer den Einschlußpigmenten mindestens einen der genannten farbstabilisierenden Hilfsstoffe in einer Menge von 5 bis 50 Gew.-%, berechnet als ZnO beziehungsweise Ce₂O₃ beziehungsweise CeO₂ und bezogen auf die Menge an Einschlußpigmenten, enthält.

3. Verfahren nach Anspruch 2,
dadurch gekennzeichnet,
daß die Pigmentzusammensetzung zusätzlich ein flüssiges oder pastöses Druckmedium enthält.

4. Verfahren nach einem der Ansprüche 1 bis 3,
dadurch gekennzeichnet,
daß als Einschlußpigmente Cadmiumsulfid oder Cadmiumsulfoselenid enthaltende Zirkon-Einschlußpigmente eingesetzt werden.

5. Verfahren nach einem oder mehreren der Ansprüche 1 bis 4,
dadurch gekennzeichnet,
daß zur Herstellung der Dekorschicht 20 bis 40 Gew.-% Zinkoxid oder 30 bis 50 Gew.-% einer Glasfritte mit einem ZnO-Gehalt von 30 bis 50 Gew.-% oder 10 bis 30 Gew.-% Cerdioxid, jeweils bezogen auf die Menge an Einschlußpigmenten, eingesetzt werden.

6. Pigmentzusammensetzung, enthaltend Einschlußpigmente auf der Basis von in einer transparenten oxidischen oder silikatischen Hülle eingeschlossenen Kristallen aus farbigen Schwermetallsulfiden, -seleniden oder -sulfoseleniden, zur Herstellung von im Porzellanbrand im wesentlichen farbstabilen Dekoren,
dadurch gekennzeichnet,
daß sie zusätzlich zu den Einschlußpigmenten mindestens einen farbstabilisierenden Hilfsstoff aus der Reihe von Cer(III)- oder Cer(IV)-verbindungen, Zinkoxid oder anderen während des Porzellanbrandes Zinkionen bildenden Zinkverbindungen in einer Menge von mindestens 2 Gew.-%, berechnet als ZnO beziehungsweise Ce₂O₃ beziehungsweise CeO₂ und bezogen auf die Menge an Einschlußpigmenten, enthält.

7. Pigmentzusammensetzung nach Anspruch 6,
dadurch gekennzeichnet,
daß sie als farbstabilisierenden Hilfsstoff Zinkoxid, eine zinkhaltige Glasfritte mit einem ZnO-Gehalt von 20 bis 70 Gew.-% oder Cerdioxid enthält.

8. Pigmentzusammensetzung nach Anspruch 7,
dadurch gekennzeichnet,
daß sie CeO₂ oder ZnO in einer Menge von 5 bis 50 Gew.-%, vorzugsweise ZnO in einer Menge von 20 bis 40 Gew.-% oder eine zinkhaltige Glasfritte mit einem ZnO-Gehalt von 30 bis 50 Gew.-% in einer Menge von 30 bis 50 Gew.-% oder Cerdioxid in einer Menge von 10 bis 30 Gew.-%, jeweils bezogen auf das in der Zusammensetzung enthaltene Einschlußpigment, enthält.

9. Pigmentzusammensetzung nach einem der Ansprüche 6 bis 8,
dadurch gekennzeichnet,
daß es sich bei dem Einschlußpigment um Cadmiumsulfid oder Cadmiumsulfoselenid enthaltendes Zirkon-Einschlußpigment handelt.

10. Pigmentzusammensetzung nach einem oder mehreren der Ansprüche 6 bis 9,
dadurch gekennzeichnet,
daß sie zusätzlich ein flüssiges oder pastöses Druckmedium enthält.

## Patentansprüche (Patentansprüche für folgende(n) Vertragsstaat(en): ES)

1. Verfahren zur Herstellung von im Porzellanbrand (Glattbrand) im wesentlichen farbstabilen Dekoren, umfassend die Schritte des Aufbringens einer Dekorschicht und einer Glasurschicht auf ungebranntes oder im Biskuitbrand vorgebranntes Porzellan und des Porzellanbrandes bei einer Temperatur im Bereich von 1300 bis 1500 °C,
dadurch gekennzeichnet,
daß in der Dekorschicht Einschlußpigmente auf der Basis von in einer transparenten oxidischen oder silikatischen Hülle eingeschlossenen Kristallen aus farbigen Schwermetallsulfiden, -seleniden oder -sulfoseleniden und in der Dekorschicht und/oder in der Glasurschicht mindestens ein farbstabilisierender Hilfsstoff aus der Reihe von Cer(III)- oder Cer(IV)-Verbindungen, Zinkoxid oder anderen während des Porzellanbrandes Zinkionen bildenden Zinkverbindungen in einer Menge von mindestens 2 Gew.-%, jeweils berechnet als ZnO beziehungsweise Ce₂O₃ beziehungsweise CeO₂ und bezogen auf die Menge an anorganischen Feststoffen in der Dekor- bzw. Glasurschicht, eingesetzt werden.

2. Verfahren nach Anspruch 1,
dadurch gekennzeichnet,
daß zur Aufbringung der Dekorschicht eine Pigmentzusammensetzung verwendet wird, welche außer den Einschlußpigmenten mindestens einen der genannten farbstabilisierenden Hilfsstoffe in einer Menge von 5 bis 50 Gew.-%, berechnet als ZnO beziehungsweise Ce₂O₃ beziehungsweise CeO₂ und bezogen auf die Menge an Einschlußpigmenten, enthält.

3. Verfahren nach Anspruch 2,
dadurch gekennzeichnet,
daß die Pigmentzusammensetzung zusätzlich ein flüssiges oder pastöses Druckmedium enthält.

4. Verfahren nach einem der Ansprüche 1 bis 3,
dadurch gekennzeichnet,
daß als Einschlußpigmente Cadmiumsulfid oder Cadmiumsulfoselenid enthaltende Zirkon-Einschlußpigmente eingesetzt werden.

5. Verfahren nach einem oder mehreren der Ansprüche 1 bis 4,
dadurch gekennzeichnet,
daß zur Herstellung der Dekorschicht 20 bis 40 Gew.-% Zinkoxid oder 30 bis 50 Gew.-% einer Glasfritte mit einem ZnO-Gehalt von 30 bis 50 Gew.-% oder 10 bis 30 Gew.-% Cerdioxid, jeweils bezogen auf die Menge an Einschlußpigmenten, eingesetzt werden.

## Claims (Claims for the following Contracting State(s): DE, FR, GB, IT, NL, PT)

1. A process for the production of decorations the colours whereof are substantially stable in the porcelain firing (gloss firing), comprising the steps of applying a decorative coating and a glaze coating to unfired porcelain or to porcelain prefired in the biscuit firing, and of porcelain faring at a temperature in the range of from 1300°C to 1500°C,
characterised in that
inclusion pigments based on crystals of coloured heavy metal sulphides, heavy metal selenides or heavy metal sulphoselenides enclosed in a transparent oxide or silicate shell are used in the decorative coating, and at least one colour-stabilising auxiliary substance from among the cerium(III) or cerium(IV) compounds, zinc oxide or other zinc compounds forming zinc ions during the porcelain firing, in a quantity of at least 2 wt.%, each calculated as ZnO or Ce₂O₃ or CeO₂ as the case may be and based on the quantity of inorganic solids in the decorative or glaze coating, are used in the decorative coating and/or in the glaze coating.

2. A process according to claim 1,
characterised in that
for the application of the decorative coating a pigment composition is used which, in addition to the inclusion pigments, contains at least one of the above-mentioned colour-stabilising auxiliary substances in a quantity of from 5 to 50 wt.%, calculated as ZnO or Ce₂O₃ or CeO₂ as the case may be and based on the quantity of inclusion pigments.

3. A process according to claim 2,
characterised in that
the pigment composition contains in addition a liquid or paste-like printing medium.

4. A process according to one of claims 1 to 3
characterised in that
zircon inclusion pigments containing cadmium sulphide or cadmium sulphoselenide are used as inclusion pigments.

5. A process according to one or more of claims 1 to 4,
characterised in that
from 20 to 40 wt.% zinc oxide or from 30 to 50 wt.% of a glass frit having a ZnO content of from 30 to 50 wt.% or from 10 to 30 wt.% cerium dioxide, each based on the quantity of inclusion pigments, are used for the preparation of the decorative coating.

6. A pigment composition, containing inclusion pigments based on crystals of coloured heavy metal sulphides, heavy metal selenides or heavy metal sulphoselenides enclosed in a transparent oxide or silicate shell, for the production of decorations the colours whereof are substantially stable in the porcelain firing,
characterised in that
they contain in addition to the inclusion pigments at least one colour-stabilising auxiliary substance from among the cerium(III) or cerium(IV) compounds, zinc oxide or other zinc compounds forming zinc ions during the porcelain firing, in a quantity of at least 2 wt.%, calculated as ZnO or Ce₂O₃ or CeO₂ as the case may be and based on the quantity of inclusion pigments.

7. A pigment composition according to claim 6,
characterised in that
it contains as colour-stabilising auxiliary substance zinc oxide, a zinc-containing glass frit having a ZnO content of from 20 to 70 wt.% or cerium dioxide.

8. A pigment composition according to claim 7,
characterised in that
it contains CeO₂ or ZnO in a quantity of from 5 to 50 wt.%, preferably ZnO in a quantity of from 20 to 40 wt.%, or from 30 to 50 wt.% of a zinc-containing glass frit having a zinc content of from 30 to 50 wt.%, or cerium dioxide in quantity of from 10 to 30 wt.%, each based on the inclusion pigment contained in the composition.

9. A pigment composition according to one of claims 6 to 8,
characterised in that
the inclusion pigment is a zircon inclusion pigment containing cadmium sulphide or cadmium sulphoselenide.

10. A pigment composition according to one or more of claims 6 to 9,
characterised in that
it contains in addition a liquid or paste-like printing medium.

## Claims (Claims for the following Contracting State(s): ES)

1. A process for the production of decorations the colours whereof are substantially stable in the porcelain firing (gloss firing), comprising the steps of applying a decorative coating and a glaze coating to unfired porcelain or to porcelain prefired in the biscuit firing, and of porcelain firing at a temperature in the range of from 1300°C to 1500°C,
characterised in that
inclusion pigments based on crystals of coloured heavy metal sulphides, heavy metal selenides or heavy metal sulphoselenides enclosed in a transparent oxide or silicate shell are used in the decorative coating, and at least one colour-stabilising auxiliary substance from among the cerium(III) or cerium(IV) compounds, zinc oxide or other zinc compounds forming zinc ions during the porcelain firing, in a quantity of at least 2 wt.%, each calculated as ZnO or Ce₂O₃ or CeO₂ as the case may be and based on the quantity of inorganic solids in the decorative or glaze coating, are used in the decorative coating and/or in the glaze coating.

2. A process according to claim 1,
characterised in that
for the application of the decorative coating a pigment composition is used which, in addition to the inclusion pigments, contains at least one of the above-mentioned colour-stabilising auxiliary substances in a quantity of from 5 to 50 wt.%, calculated as ZnO or Ce₂O₃ or CeO₂ as the case may be and based on the quantity of inclusion pigments.

3. A process according to claim 2,
characterised in that
the pigment composition contains in addition a liquid or paste-like printing medium.

4. A process according to one of claims 1 to 3
characterised in that
zircon inclusion pigments containing cadmium sulphide or cadmium sulphoselenide are used as inclusion pigments.

5. A process according to one or more of claims 1 to 4,
characterised in that
from 20 to 40 wt.% zinc oxide or from 30 to 50 wt.% of a glass frit having a ZnO content of from 30 to 50 wt.% or from 10 to 30 wt.% cerium dioxide, each based on the quantity of inclusion pigments, are used for the preparation of the decorative coating.

## Revendications (Revendications pour l'(les) Etat(s) contractant(s) suivant(s): DE, FR, GB, IT, NL, PT)

1. Procédé de la fabrication de décorations à couleurs largement résistantes à la cuisson de la porcelaine (grand feu), comprenant les étapes de l'application d'une couche de décoration et d'une couche de glaçure sur la porcelaine non cuite ou précuite par une cuisson de biscuit, et la cuisson de la porcelaine à une température comprise entre 1300 et 1500°C,
caractérisé en ce que
sont mis en oeuvre dans la couche de décoration des pigments d'inclusion à base de cristaux de sulfures, sélénures et sulfosélénures de métaux lourds colorés enfermés dans une enveloppe transparente oxydique ou silicatique et en ce que sont mis en oeuvre dans la couche de décoration et/ou dans la couche de glaçure au moins un agent auxiliaire stabilisant la couleur de la série comprenant les composés cériques ou céreux, l'oxyde de zinc, ou d'autres composés du zinc formant des ions du zinc lors de la cuisson de la porcelaine, en une quantité d'au moins 2 % en poids, respectivement calculée comme du ZnO ou du Ce₂O₃ ou du CeO₂ et par rapport à la quantité de matière solide inorganique contenue dans la couche de décoration ou de glaçure.

2. Procédé selon la revendication 1,
caractérisé en ce que
pour l'application de la couche de décoration, une composition de pigments contenant en dehors des pigments d'inclusion au moins un des agents auxiliaires mentionnés en une quantité de 5 à 50 % en poids, calculée comme du ZnO ou du Ce₂O₃ ou du CeO₂ et par rapport à la quantité de pigments d'inclusion est utilisée.

3. Procédé selon la revendication 2,
caractérisé en ce que
la composition de pigment contient en addition un milieu de pression liquide ou pâteux.

4. Procédé selon la revendication 1 à 3,
caractérisé en ce que
sont mis en oeuvre en tant que pigments d'inclusion des pigments d'inclusion au zircon contenant du sulfure de cadmium ou du sulfosélénure de cadmium.

5. Procédé selon un ou plusieurs revendications 1 à 4?
caractérisé en ce que
20 à 40 % en poids d'oxyde de zinc ou 30 à 50 % en poids d'une fritte de verre avec une teneur en ZnO de 30 à 50 % en poids ou 10 à 30 % en poids de dioxyde de cérium, respectivement par rapport à la quantité de pigments d'inclusion, sont mis en oeuvre pour la fabrication de la couche de décoration.

6. Composition de pigments contenant des pigments d'inclusion à base de cristaux de sulfures, sélénures ou sulfosélénures de métaux lourds colorés, enfermés dans une enveloppe transparente oxydique ou silicatique, pour la fabrication de décorations à couleurs largement résistantes à la cuisson de porcelaine,
caractérisée en ce qu'elle
contient en addition aux pigments d'inclusion au moins un agent auxiliaire stabilisant la couleur de la série comprenant les composés cériques ou céreux, l'oxyde de zinc, ou d'autres composés du zinc formant des ions du zinc lors de la cuisson de la porcelaine, en une quantité d'au moins 2 % en poids, respectivement calculée comme du ZnO ou du Ce₂O₃ ou du CeO₂ et par rapport à la quantité de pigments d'inclusion.

7. Composition de pigments selon la revendication 6,
caractérisée en ce qu'elle
contient en tant qu'agent auxiliaire stabilisant la couleur de l'oxyde de zinc, une fritte de verre contenant du zinc avec une teneur en zinc de 20 à 70 % en poids ou du dioxyde de cérium.

8. Composition de pigments selon la revendication 7,
caractérisée en ce qu'elle
contient du CeO₂ ou du ZnO en une quantité de 5 à 50 % en poids, de préférence du ZnO en une quantité de 20 à 40 % en poids ou une fritte de verre avec une teneur en zinc de 30 à 50 % en poids en une quantité de 30 à 50 % en poids ou du dioxyde de cérium en une quantité de 10 à 30 % en poids, respectivement par rapport au pigment d'inclusion contenu dans la composition de pigments.

9. Composition de pigments selon une des revendications 6 à 8,
caractérisée en ce que
concernant le pigment d'inclusion, il s'agit d'un pigment d'inclusion au zircon contenant du sulfure de cadmium ou du sulfosélénure de cadmium.

10. Composition de pigments selon une ou plusieurs des revendications 6 à 9,
caractérisée en ce qu'elle
contient en addition un milieu de pression liquide ou pâteux.

## Revendications (Revendications pour l'(les) Etat(s) contractant(s) suivant(s): ES)

1. Procédé de la fabrication de décorations à couleurs largement résistantes à la cuisson de la porcelaine (grand feu), comprenant les étapes de l'application d'une couche de décoration et d'une couche de glaçure sur la porcelaine non cuite ou précuite par une cuisson de biscuit, et la cuisson de la porcelaine à une température comprise entre 1300 et 1500°C,
caractérisé en ce que
sont mis en oeuvre dans la couche de décoration des pigments d'inclusion à base de cristaux de sulfures, sélénures et sulfosélénures de métaux lourds colorés enfermés dans une enveloppe transparente oxydique ou silicatique et en ce que sont mis en oeuvre dans la couche de décoration et/ou dans la couche de glaçure au moins un agent auxiliaire stabilisant la couleur de la série comprenant les composés cériques ou céreux, l'oxyde de zinc, ou d'autres composés du zinc formant des ions du zinc lors de la cuisson de la porcelaine, en une quantité d'au moins 2 % en poids, respectivement calculée comme du ZnO ou du Ce₂O₃ ou du CeO₂ et par rapport à la quantité de matière solide inorganique contenue dans la couche de décoration ou de glaçure.

2. Procédé selon la revendication 1,
caractérisé en ce que
pour l'application de la couche de décoration, une composition de pigments contenant en dehors des pigments d'inclusion au moins un des agents auxiliaires mentionnés en une quantité de 5 à 50 % en poids, calculée comme du ZnO ou du Ce₂O₃ ou du CeO₂ et par rapport à la quantité de pigments d'inclusion est utilisée.

3. Procédé selon la revendication 2,
caractérisé en ce que
la composition de pigment contient en addition un milieu de pression liquide ou pâteux.

4. Procédé selon la revendication 1 à 3,
caractérisé en ce que
sont mis en oeuvre en tant que pigments d'inclusion des pigments d'inclusion au zircon contenant du sulfure de cadmium ou du sulfosélénure de cadmium.

5. Procédé selon un ou plusieurs revendications 1 à 4?
caractérisé en ce que
20 à 40 % en poids d'oxyde de zinc ou 30 à 50 % en poids d'une fritte de verre avec une teneur en ZnO de 30 à 50 % en poids ou 10 à 30 % en poids de dioxyde de cérium, respectivement par rapport à la quantité de pigments d'inclusion, sont mis en oeuvre pour la fabrication de la couche de décoration.
